# EUROPEAN PATENT APPLICATION

(11) **EP 1 696 636 A1**
(43) Date of publication of application: **30.08.2006**
(21) Application number: 06251084.7
(22) Date of filing: 28.02.2006
(51) Int. Cl.: H04L 29/08, H04L 29/06

(54) **Session processing system and method**

(30) Priority: 28.02.2005 JP 2005053821
(71) Applicant: NEC Corporation, Minato-ku Tokyo 108 (JP)
(72) Inventor: Shiraki, Takashi, Nec Corporation, Tokyo 108 (JP); Ono, Yoshihiro, Nec Corporation, Tokyo 108 (JP); Ito, Naoko, Nec Corporation, Tokyo 108 (JP); Schülke, Anett, Nec Europe Ltd., 69115 Heidelberg (DE)
(74) Representative: Moir, Michael Christopher

(57) **Abstract**

A session processing system, a server (11), a communication terminal (12, 13, 14), a session processing method, and a program for selecting an effective session or switching to an effective session based on a policy set by a user. A session processing system includes a plurality of communication terminals (12, 13, 14), and a server (11) for providing electronic conversation sessions in which a plurality of users or speakers participate through the communication terminals. One or more of the communication terminals (12, 13, 14) includes a plurality of session processing sections (1251, 1252, 1253) each processing a session.

## Description

### FIELD OF THE INVENTION

The present invention relates to a session processing system, a server, a communication terminal, a session processing method, and a program for enabling a plurality of users to have electronic conversations with one another through their terminals.

### BACKGROUND OF THE INVENTION

There have been known electronic conversation technologies for offering communication services, such as PTT (Push-To-Talk) communication service, that allow a plurality of users to have a conversation with one another through their terminals. In the conventional communication services, when a user participates in a plurality of sessions at the same time, the user has no effective measure to select the transmission or reception of input/ output media (voice, text, etc.) exchanged in the sessions and transmission/ reception method based on a policy set by the user or operator. Accordingly, the user cannot change the service type or mode while participating in the sessions.

As an example of conventional technology concerning the PTT communication service may be cited "One-To-N Communication System" disclosed in Japanese Patent Application laid open No. HEI5-75722. The one-to-N communication system is provided with a talker discriminating trunk PTT. When having been informed of the presence or absence of a call request from a terminal through a highway, the PTT identifies a talker. Thereby, one-to-N communication paths can be set to the talker. Thus, the one-to-N communication system has high operability, and also is capable of reducing load on call processing.

However, as has been previously mentioned, the conventional PTT communication service, including the technology described above, is not compatible with multisession. Besides, in the specification under consideration by OMA (Open Mobile Alliance), a standards organization, packets of sessions in which a user is concurrently participating are enqueued. Also, real-time packets for high priority sessions are processed, while those for low priority sessions are discarded. Such conventional technology has problems as follows:
First, since a plurality of session processing sections are not provided, effective processing cannot be performed for a plurality of sessions in which a user is participating at the same time.
Second, since switching modes are not provided for a plurality of sessions except ON and OFF, situational switching cannot be performed on the occasion when, for example, a session occurs while another session continues.

### SUMMARY OF THE INVENTION

It is therefore an object of the preferred embodiments of the present invention to provide a session processing system, a server, a communication terminal, a session processing method, and a program for selecting an effective session or switching to an effective session. The communication terminal is provided with a plurality of session processing sections. With the use of different input/output media (voice, text, etc.) and different types of services such as a recording function, the user can select effective sessions or switch to an effective session based on a policy set by him/her.

In accordance with the first aspect of the present invention, there is provided a session processing system comprising a plurality of communication terminals, and a server for providing electronic conversations sessions in which a plurality of users or speakers participate through the communication terminals, wherein at least either one of the communication terminal or the server includes a plurality of session processing sections each processing a session.

In accordance with the second aspect of the present invention, there is provided a session processing system comprising a plurality of communication terminals, and a server for providing electronic conversation sessions in which a plurality of users or speakers participate through the communication terminals. At least either one of the communication terminal or the server includes a plurality of session processing sections each processing a session, an input/ output section for transmitting and receiving session data, a session discrimination section for determining whether a session is existing or new based on the session data received from the input/ output section to classify the session as a new or existing session, a session rating section for prioritizing a session discriminated as a new one by the session discrimination section based on a preset policy, and a session assignment section for assigning the new session to one of the session processing sections based on the priority determined by the session rating section and the processing capabilities of the respective session processing sections.

In accordance with the third aspect of the present invention, in the session processing system of the second aspect, in the case of a shortage of the session processing sections for processing sessions, the session assignment section terminates communication through one or more sessions.

In accordance with the fourth aspect of the present invention, in the session processing system of the second or third aspect, wherein at least either one of the communication terminal or the server further includes a session storage for storing the session data.

In accordance with the fifth aspect of the present invention, in the session processing system of the fourth aspect, in the case of a shortage of the session processing sections for processing sessions, the session storage stores the media data of one or more sessions.

In accordance with the sixth aspect of the present invention, in the session processing system of one of the second to fifth aspects, on completion of the processing of an existing session, the session assignment section assigns another session to the session processing section to which the existing session has been assigned.

In accordance with the seventh aspect of the present invention, in the session processing system of one of the second to sixth aspects, after having undergone the process by the session processing section, an existing session is changed to a prescribed process.

In accordance with the eighth aspect of the present invention, in the session processing system of one of the second to seventh aspects, the policy is set at an arbitrary timing.

In accordance with the ninth aspect of the present invention, in the session processing system of one of the second to eighth aspects, the content of the policy is concerned with the session start time.

In accordance with the tenth aspect of the present invention, in the session processing system of one of the second to ninth aspects, the content of the policy is concerned with the number of participants in each session.

In accordance with the eleventh aspect of the present invention, in the session processing system of one of the second to tenth aspects, the content of the policy is concerned with the liveliness of each session.

In accordance with the twelfth aspect of the present invention, in the session processing system of one of the second to eleventh aspects, the content of the policy is concerned with the speaking status of a particular or all participants in each session.

In accordance with the thirteenth aspect of the present invention, in the session processing system of one of the second to twelfth aspects, the content of the policy is concerned with an accounting system for each session.

In accordance with the fourteenth aspect of the present invention, in the session processing system of one of the second to thirteenth aspects, in the case of a shortage of the session processing sections for processing sessions, the session assignment section perform assignment so that a session having the lowest priority is stored in the session storage.

In accordance with the fifteenth aspect of the present invention, in the session processing system of one of the first to fourteenth aspects, the sessions are performed using PTT (Push-To-Talk) communication

In accordance with the sixteenth aspect of the present invention, there is provided a server used in the session processing system of one of the first to fifteenth aspects.

In accordance with the seventeenth aspect of the present invention, there is provided a communication terminal used in the session processing system of one of the first to fifteenth aspects.

In accordance with the eighteenth aspect of the present invention, there is provided a session processing method using a plurality of communication terminals and a server for providing electronic conversation sessions in which a plurality of users or speakers participate through the communication terminals, the method comprising the step of at least either one of the communication terminal or the server processing a plurality of sessions.

In accordance with the nineteenth aspect of the present invention, there is provided a session processing method using a plurality of communication terminals and a server for providing electronic conversation sessions in which a plurality of users or speakers participate through the communication terminals. The method comprising the steps of, in at least either one of the communication terminal or the server, receiving session data, determining whether a session is existing or new based on the received session data, classifying the session as a new or existing session, prioritizing the new session based on a preset policy, and assigning the new session to one of session processing sections based on the priority and the processing capabilities of the respective session processing sections for processing the session.

In accordance with the twentieth aspect of the present invention, in the session processing method of the nineteenth aspect, in the case of a shortage of the session processing sections for processing sessions, communication through one or more sessions is terminated.

In accordance with the twenty-first aspect of the present invention, the session processing method of the nineteenth or twentieth aspect further comprises the step of storing the session data.

In accordance with the twenty-second aspect of the present invention, in the session processing method of the twenty-first aspect, in the case of a shortage of the session processing sections for processing sessions, the media data of one or more sessions are stored.

In accordance with the twenty-third aspect of the present invention, in the session processing method of one of the nineteenth to twenty-second aspects, on completion of the processing of an existing session, another session is assigned to the session processing section to which the existing session has been assigned.

In accordance with the twenty-fourth aspect of the present invention, in the session processing method of one of the nineteenth to twenty-third aspects, after having undergone the process by the session processing section, an existing session is changed to a prescribed process.

In accordance with the twenty-fifth aspect of the present invention, in the session processing method of one of the nineteenth to twenty-fourth aspects, the policy is set at an arbitrary timing.

In accordance with the twenty-sixth aspect of the present invention, in the session processing method of one of the nineteenth to twenty-fifth aspects, the content of the policy is concerned with the session start time.

In accordance with the twenty-seventh aspect of the present invention, in the session processing method of one of the nineteenth to twenty-sixth aspects, the content of the policy is concerned with the number of participants in each session.

In accordance with the twenty-eighth aspect of the present invention, in the session processing method of one of the nineteenth to twenty-seventh aspects, the content of the policy is concerned with the liveliness of each session.

In accordance with the twenty-ninth aspect of the present invention, in the session processing method of one of the nineteenth to twenty-eighth aspects, the content of the policy is concerned with the speaking status of a particular or all participants in each session.

In accordance with the thirtieth aspect of the present invention, in the session processing method of one of the nineteenth to twenty-ninth aspects, the content of the policy is concerned with an accounting system for each session.

In accordance with the thirty-first aspect of the present invention, in the session processing method of one of the nineteenth to thirtieth aspects, in the case of a shortage of the session processing sections for processing sessions, a session having the lowest priority is stored.

In accordance with the thirty-second aspect of the present invention, in the session processing method of one of the eighteenth to thirty-first aspects, the sessions are performed using PTT communication.

In accordance with the thirty-third aspect of the present invention, there is provided a computer program product for providing electronic conversation sessions in which a plurality of users or speakers participate through their communication terminals, the computer program product embodied on a computer-readable medium and comprising code that, when executed, causes a computer to process a plurality of sessions.

In accordance with the thirty-fourth aspect of the present invention, there is provided a computer program product for providing electronic conversation sessions in which a plurality of users or speakers participate through their communication terminals. The computer program product is embodied on a computer-readable medium and comprises code that, when executed, causes a computer to perform the steps of receiving session data, determining whether a session is existing or new based on the received session data, classifying the session as a new or existing session, prioritizing the new session based on a preset policy, and assigning the new session to one of session processing sections based on the priority and the processing capabilities of the respective session processing sections for processing the session.

In accordance with the thirty-fifth aspect of the present invention, in the computer program of the thirty-fourth aspect, in the case of a shortage of the session processing sections for processing sessions, the code causes the computer to terminate communication through one or more sessions.

In accordance with the thirty-sixth aspect of the present invention, in the computer program of the thirty-fourth or thirty-fifth aspect, the code causes the computer to store the session data.

In accordance with the thirty-seventh aspect of the present invention, in the computer program of the thirty-sixth aspect, in the case of a shortage of the session processing sections for processing sessions, the code causes the computer to store the media data of one or more sessions.

In accordance with the thirty-eighth aspect of the present invention, in the computer program of one of the thirty-fourth to thirty-seventh aspects, on completion of the processing of an existing session, the code causes the computer to assign another session to the session processing section to which the existing session has been assigned.

In accordance with the thirty-ninth aspect of the present invention, in the computer program of one of the thirty-fourth to thirty-eighth aspects, after the session processing section completes processing an existing session, the code causes the computer to change the session to a prescribed process.

"In accordance with the fortieth aspect of the present invention, in the computer program of one of the thirty-fourth to thirty-ninth aspects, the code causes the computer to set the policy at an arbitrary timing.

In accordance with the forty-first aspect of the present invention, in the computer program of one of the thirty-fourth to fortieth aspects, the code causes the computer to determine the priority based on the policy, the content of which is concerned with the session start time.

In accordance with the forty-second aspect of the present invention, in the computer program of one of the thirty-fourth to forty-first aspects, the code causes the computer to determine the priority based on the policy, the content of which is concerned with the number of participants in each session.

In accordance with the forty-third aspect of the present invention, in the computer program of one of the thirty-fourth to forty-second aspects, the code causes the computer to determine the priority based on the policy, the content of which is concerned with the liveliness of each session.

In accordance with the forty-fourth aspect of the present invention, in the computer program of one of the thirty-fourth to forty-third aspects, the code causes the computer to determine the priority based on the policy, the content of which is concerned with the speaking status of a particular or all participants in each session.

In accordance with the forty-fifth aspect of the present invention, in the computer program of one of the thirty-fourth to forty-fourth aspects, the code causes the computer to determine the priority based on the policy, the content of which is concerned with an accounting system for each session.

In accordance with the forty-sixth aspect of the present invention, in the computer program of one of the thirty-fourth to forty-fifth aspects, in the case of a shortage of the session processing sections for processing sessions, the code causes the computer to store a session having the lowest priority.

In accordance with the forty-seventh aspect of the present invention, in the computer program of one of the thirty-third to forty-sixth aspects, the sessions are performed using PTT communication.

As is described above, in accordance with the present invention, it is possible to participate in a plurality of sessions, which are concurrently conducted, through a single communication terminal.

### BRIEF DESCRIPTION OF THE DRAWINGS

Preferred features of the present inventionwill nowbe described, by way of example only, with reference to the accompanying drawings, in which:-
Fig. 1 is a block diagram showing the construction of a session processing system according to the first embodiment of the present invention;
Fig. 2 is a diagram showing examples of the capabilities of session processing sections according to the first embodiment of the present invention;
Fig. 3 is a diagram showing examples of sessions according to the first embodiment of the present invention;
Fig. 4 is a diagram showing a priority criterion table according to the first embodiment of the present invention;
Fig. 5 is a block diagram showing the construction of a session processing system according to the second embodiment of the present invention; and
Fig. 6 is a diagram showing an example of an accounting system according to the second embodiment of the present invention.

### DESCRIPTION OF THE PREFERRED EMBODIMENTS

Referring now to the drawings, a description of preferred embodiments of the present invention will be given in detail.

First, a general outline of the embodiments of the present invention will be described.

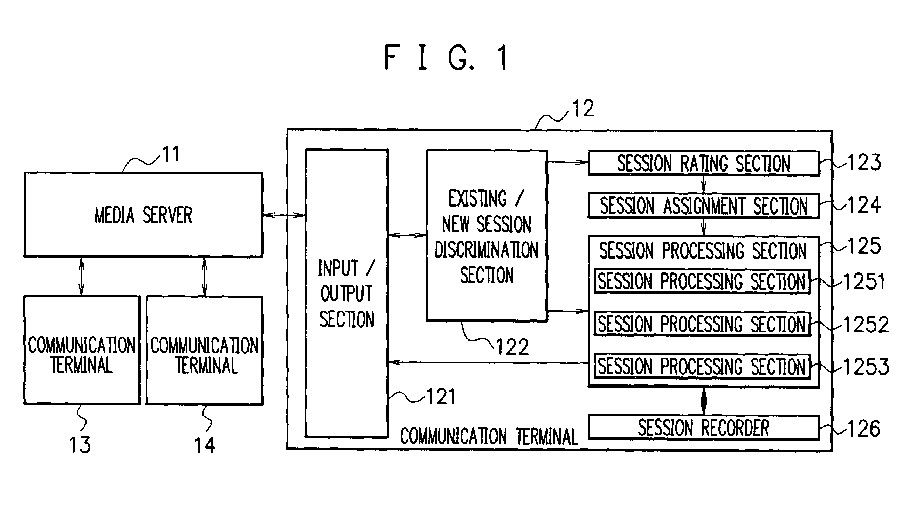

As shown in Fig. 1, according to the embodiments of the present invention, a session processing system comprises a media server 11 and a plurality of communication terminals 12, 13 and 14 each connected to the server 11, and provides communication services such as PTT (Push-To-Talk) communication service. Incidentally, the communication services, in the embodiments, are concerned with electronic conversation technologies, and allow a plurality of users or speakers to have a conversation with one another through their terminals. The communication services enable communication between people, between a person and an object (machine), and between objects (machines). The communication terminal includes a session rating section 123, a session assignment section 124 and session processing sections 1251 to 1253. The session assignment section 124 assigns respective sessions to the session processing sections 1251 to 1253 or switches the assignment of sessions so that a user can participate in a plurality of concurrent sessions. The term "session" as used herein indicates a unit of communication access between two or more users.

According to the priorities of respective sessions determined by the session rating section 123 based on a session selection policy and the number of services available through the communication terminal (the number of available session processing sections), the session assignment section 124 assigns the sessions to the session processing sections 1251, 1252 and 1253, respectively, or determines not to assign a session to any of them. In addition, the session assignment section 124 determines to change the assignment of a session, which has already been assigned to a session processing section and the user is participating in, to another session processing section. While, in the embodiments, the communication terminal 12 is provided with the three session processing sections 1251 to 1253 as shown in Fig. 1, the number is given merely by way of example and without limitation. The communication terminals may include different numbers of session processing sections, respectively.

As is described above, according to the embodiments of the present invention, sessions are assigned or the assignment of sessions is changed based on a session selection policy and the number of services available through the communication terminal. Thus, communication can be performed according to the user policy to the extent determined for each communication terminal.

### First Embodiment

Fig. 1 is a block diagram showing the construction of a session processing system according to the first embodiment of the present invention. Referring to Fig. 1, the session processing system comprises a media server 11 for multi-session processing and a plurality of communication terminals 12, 13 and 14. The media server 11 transmits/receives, through sessions, packets of voice data, moving image data, etc. to/from the respective communication terminals 12, 13 and 14 connected thereto. Incidentally, the term "packet" as used herein indicates a unit of arbitrary communication data transmission.

Each of the communication terminals 12, 13 and 14 is an information processing terminal capable of communication, which transmits/ receives packets to/ from the media server 11 according to a preset session policy within the scope of its processing capabilities.

In the following, the construction of the communication terminals 12, 13, and 14 will be described. The communication terminals 12, 13, and 14 are of like construction and thus but one of them, for example, the terminal 12 will be described.

The communication terminal 12 includes an input/ output section 121, an existing/ new session discrimination section 122, a session rating section 123, a session assignment section 124, a plurality of session processing sections 125 (1251 to 1253), and a session recorder 126.

The input/ output section 121 transmits/ receives packets to/ from the media server 11. The input/ output section 121 has the function of forwarding packets to others.

The existing/ new session discrimination section 122 determines whether or not a packet received from the input/ output section 121 belongs to an existing session assigned to any of the session processing sections 1251 to 1253, thereby discriminating between new and existing sessions. According to the determination result, a new session, which has not been assigned, is sent to the session rating section 123. On the other hand, an existing session, which has already been assigned, is sent to the session processing section 125.

The session rating section 123 prioritizes the new session, to which the packet belongs, received from the existing/ new session discrimination section 122 together with sessions currently in process based on a preset session selection policy (priority criteria).

The session assignment section 124 assigns the session, to which the packet belongs, to the session processing section 125, or switches the assignment of sessions based on the priority determined by the session rating section 123 and the processing capabilities of the communication terminal. Besides, when the number of sessions exceeds the number of sessions in which the user can concurrently participate, the session assignment section 124 determines to terminate transmission/ reception to/ from the media server 11.

The session processing section 125 (any of the session processing sections 1251 to 1253 designated by the session assignment section 124) processes the session, to which the packet belongs.

As just described, the communication terminal 12 is provided with one or more session processing sections 125 (1251 to 1253). The session processing sections 1251 to 1253 each process packets or media (voice, text, etc.) of a single session according to the processing capabilities. Thereby, the user can participate in sessions to the extent permitted by the number of the session processing sections provided in the communication terminal.

The session recorder 126 records packets. In addition, when the number of sessions exceeds the number of sessions in which the user can participate, the session recorder 126 records media exchanged through one or more excess sessions for the session processing sections.

Next, the operation of the communication terminal 12 will be described. First, a session processing program is loaded into the communication terminal 12 from a storage medium or the like (not shown) to control the operation of the terminal 12. Under the control of the session processing program, the communication terminal 12 performs the following processing. The operation of this embodiment is based on PTT communication service capable of communicating voice, text, etc. through half-duplex communication.

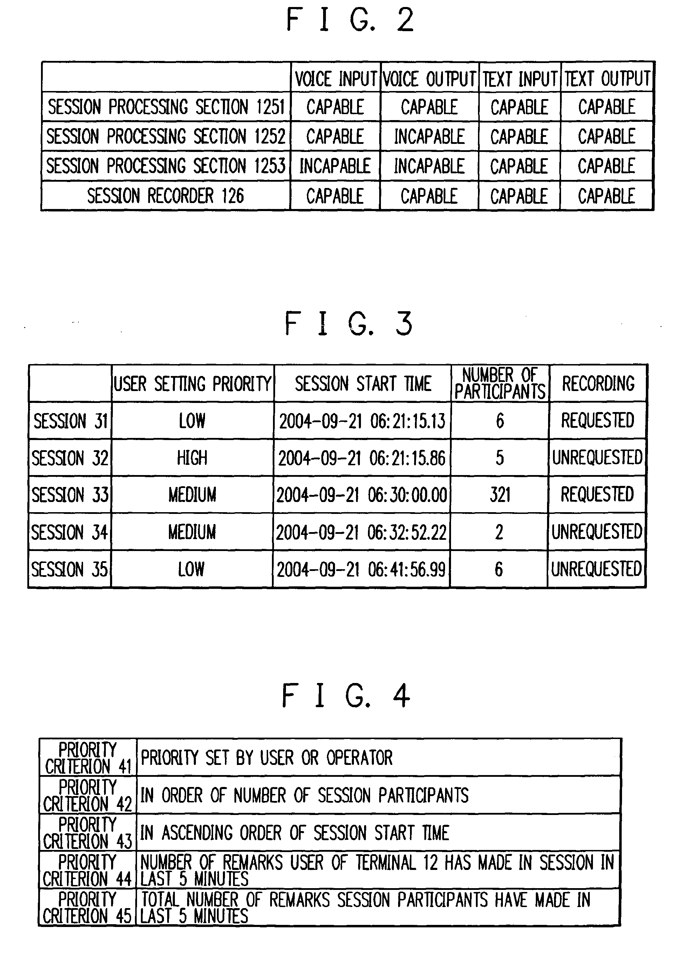

Fig. 2 is a diagram showing examples of the capabilities of the session processing sections 1251 to 1253. Fig. 3 is a diagram showing examples of sessions. The following description will be given of the case where, for example, in the communication terminal 12 shown in Fig. 1, the respective session processing sections 1251 to 1253 are in the state as shown in Fig. 2, and, sessions 31 to 35 shown in Fig. 3 are sequentially required from the state of no session being processed.

Additionally, in this embodiment, voice input/ output is selected as preferentially as possible, and when voice input/ output is not available, text input/ output or recording is performed. Further, in this embodiment, the session recorder 126 can concurrently record up to two sessions. Still further, as "user setting priority" (priority preset by the user) for each session shown in Fig. 3, there are three levels of priority: "high > medium > low". Fig. 4 is a diagram showing priority criteria (session selection policy) set in the communication terminal 12. In the priority criterion table shown in Fig. 4, the priority criteria are listed in the order of priority from the top.

In the initial state, it is assumed that there is no session being processed, and all the session processing sections 1251, 1252 and 1253 and the session recorder 126 are unused.

### [Request for Session 31]

On receipt of a request for a session 31 shown in Fig. 3 from the media server 11 shown in Fig. 1, the input/ output section 121 of the communication terminal 12 sends the session 31 (packet) to the existing/ new session discrimination section 122. Since there is no session being processed in the initial state, the existing/ new session discrimination section 122 classifies the session 31 as a new one, and sends it to the session rating section 123. The session rating section 123 prioritizes the session 31 based on the priority criterion table shown in Fig. 4. Since there is no existing session, the session 31 is given top priority in the communication terminal 12, and processed by the session processing section 1251.

After that, packets of the session 31 are transmitted from the session processing section 1251 to the media server 11 through the input/ output section 121. At the same time, since the recording of the session 31 is "requested" as shown in Fig. 3 and there is a margin to the upper limit of the number of sessions to be recorded, the session recorder 126 records the session 31.

At this point, the session processing section 1251 is processing the session 31, the session processing sections 1252 and 1253 are unused, and the session recorder 126 is recording the session 31.

### [Request for Session 32]

Having received a request for a session 32 shown in Fig. 3 from the media server 11 while the session 31 continues, the input/ output section 121 sends the session 32 to the existing/ new session discrimination section 122. The existing/ new session discrimination section 122 classifies the session 32 as a new one, and sends it to the session rating section 123. The session rating section 123 prioritizes the session 32 based on the priority criterion table shown in Fig. 4. In other words, the session rating section 123 compares the session 32 with the existing session 31.

According to "user setting priority" shown in Fig. 3, the session 32 has a higher priority compared to the session 31. In addition, as shown in Fig. 4, priority criterion 41 indicates that prioritization is based on "priority set by user or operator". Consequently, the session 32 is given priority over the session 31, and processed by the session processing section 1251. On the other hand, the session 31 is processed by the session processing section 1252. As shown in Fig. 2, the session processing section 1252 is incapable of voice output. Thus, the session 31 is input by voice and output as text display.

At this point, the session processing sections 1251 and 1252 are processing the sessions 32 and 31, respectively, and they are transmitting/ receiving packets to/ from the media server 11 through the input/ output section 121. The session processing section 1253 is unused. The session recorder 126 is recording the session 31.

### [Request for Session 33]

Having received a request for a session 33 shown in Fig. 3 from the media server 11 while the sessions 31 and 32 continue, the input/output section 121 sends the session 33 to the existing/ new session discrimination section 122. The existing/ new session discrimination section 122 classifies the session 33 as a new one, and sends it to the session rating section 123. The session rating section 123 prioritizes the session 33 based on the priority criterion table shown in Fig. 4. In other words, the session rating section 123 compares the session 33 with the existing sessions 32 and 31.

According to "user setting priority" shown in Fig. 3, the session 33 has "medium" priority. That is, the session 33 has a lower priority than that of the session 32 and a higher priority than that of the session 31. Based on the priority criterion 41, the session 33 is processed by the session processing section 1252, while the session 31 is processed by the session processing section 1253.

As a result, as shown in Fig. 2, the session 33 is input by voice and output as text (session processing section 1252). Besides, the session 31 is input and output as text (session processing section 1253). At the same time, since the recording of the session 33 is "requested" as shown in Fig. 3 and there still remains a margin to the upper limit of the number of sessions to be recorded, the session recorder 126 records the session 33.

At this point, the session processing sections 1251, 1252 and 1253 are processing the sessions 32, 33 and 31, respectively, and they are transmitting/ receiving packets to/ from the media server 11 through the input/ output section 121. The session recorder 126 is recording the sessions 31 and 33.

### [Request for Session 34]

Having received a request for a session 34 shown in Fig. 3 from the media server 11 while the sessions 31, 32 and 33 continue, the input/output section 121 sends the session 34 to the existing/ new session discrimination section 122. The existing/ new session discrimination section 122 classifies the session 34 as a new one, and sends it to the session rating section 123. The session rating section 123 prioritizes the session 34 based on the priority criterion table shown in Fig. 4. In other words, the session rating section 123 compares the session 34 with the existing sessions 32, 33 and 31. The comparison is performed based on the priority criterion 41. According to "user setting priority" shown in Fig. 3, both the sessions 33 and 34 have "medium" priority. Therefore, priority is assigned to the sessions 33 and 34 in consideration of priority criterion 42 "in order of number of session participants".

Referring to Fig. 3, the number of participants in the session 33 (321) is more than that in the session34 (2), and accordingly, the session 33 is given priority over the session 34. Thus, the sessions are prioritized, in descending order, as follows: session 32; session 33; session 34; and session 31.

Consequently, the session 34 is processed by the session processing section 1253, and input and output as text. The input/output processing of the session 31 is not performed in real time due to the limit of the terminal capabilities (the number of the session processing sections). The session 31 is just recorded by the session recorder 126.

At this point, the session processing sections 1251, 1252 and 1253 are processing the sessions 32, 33 and 34, respectively, and they are transmitting/ receiving packets to/ from the media server 11 through the input/ output section 121. The session recorder 126 is recording the sessions 31 and 33.

### [Request for Session 35]

Having received a request for a session 35 shown in Fig. 3 from the media server 11 while the sessions 31, 32, 33 and 34 continue, the input/ output section 121 sends the session 35 to the existing/ new session discrimination section 122. The existing/ new session discrimination section 122 classifies the session 35 as a new one, and sends it to the session rating section 123. The session rating section 123 prioritizes the session 35 based on the priority criterion table shown in Fig. 4. In other words, the session rating section 123 compares the session 35 with the existing sessions 32, 33, 34 and 31. The comparison is performed based on the priority criterion 41, and then the priority criterion 42. According to "user setting priority" and "number of participants" shown in Fig. 3, the sessions 31 and 35 have the same priority (low), and there are the same number of participants (6) therein. Therefore, priority is assigned to the sessions 31 and 35 in further consideration of priority criterion 43 "in ascending order of session start time".

Referring to Fig. 3, the session 35 started at "2004-09-21 06:41:56.99", which is later than the start time of the session 31 "2004-09-21 06:21:15.13". Accordingly, the session 35 is given priority over the session 31. Thus, the sessions are prioritized, in descending order, as follows: session 32; session 33; session 34; session 35 and session 31.

Consequently, the session 35 is to be recorded by the session recorder 126. However, if the session recorder 126 records the session 35, the number of sessions being recorded exceeds 2: the upper limit of the number of sessions that the session recorder 126 can record concurrently (because the sessions 31 and 33 have already been being recorded). That is, any one of the sessions 31, 33 and 35 cannot be recorded. In this case, on the assumption that the recording of a session in which the user is participating in real time (by voice or text input/ output) has no priority according to a criterion, the recording of the session 33 is terminated. More specifically, the sessions 31 and 35 are not being processed by the session processing sections 125 in real time and just recorded by the session recorder 126. Therefore, the sessions 31 and 35 are preferentially recorded as compared to the session 33 being processed in real time.

At this point, the session processing sections 1251, 1252 and 1253 are processing the sessions 32, 33 and 34, respectively, and they are transmitting/ receiving packets to/ from the media server 11 through the input/ output section 121. The session recorder 126 is recording the sessions 31 and 35.

### [Completion of Session 32]

In the following, a description will be given of the case that, in situations where the sessions 31, 32, 33, 34 and 35 continue, the existing session 32 ends and no longer needs processing. According to the priority criteria 41, 42 and 43, the sessions are prioritized, in descending order, as follows: session 33; session 34; session 35 and session 31. As a result of the completion of the session 32 which has had the highest priority, the priorities of the other sessions are raised or increased.

Since the session processing section 1253 has become free while media are being recorded and available for processing a session so that the user can participate in the session, the session 35 is assigned to the session processing section 1253. Also, the media recorded by the session recorder 126 are automatically output. Compared to the media of the session in which the user participates in real time, the recorded media may be output in a less time consuming manner, such as double speed voice playback or batch text output. On completion of the output of the recorded media, the user can participate in the session 35 in real time. Incidentally, even when the user can participate in a session in real time, the recording of the media may be effected.

At this point, the session processing sections 1251, 1252 and 1253 are processing the sessions 33, 34 and 35, respectively, and they are transmitting/ receiving packets to/ from the media server 11 through the input/ output section 121. The session recorder 126 is recording the sessions 31 and 33.

As set forth hereinabove, in accordance with the first embodiment of the present invention, when a session processing section has become free and available for processing after the termination of the transmission/ reception of a session due to a limitation on the number of services available through the communication terminal, it is checked whether or not the session or a new session by the same group continues. If the session is continued, the user can participates in the session in real time.

Incidentally, in this embodiment, respective sessions can be arbitrarily assigned to the session processing sections 1251 to 1253 based on a session selection policy set by the user. For example, when the session rating section 123 has determined that a session has a high priority based on the session selection policy, the session may be assigned so as to be input/ output by voice. Then, in descending order of priority, sessions may be assigned to be input by voice and output as text, and input/ output as text.

Besides, when the number of sessions exceeds the number of the session procession sections (the number of services available through the communication terminal), the setting may be made so that a session having the lowest priority is selected to be assigned to the session recorder 126.

Further, the setting may be made so that the media of a session having a low priority, in which the user does not participate in real time, are not at all output and recorded.

Still further, the user can change the input/ output method of a session by direct input at any timing. For example, when the content of a session which has been input/ output as text becomes important to the user, he/ she can change the assignment of the session so that it is input/output by voice.

Similarly, the user can change the settings of the session selection policy at any timing. For example, when the content of a session which has been input/ output as text becomes important to the user, he/ she can change the settings of the session selection policy to thereby raise the priority of the session so that the increase in importance is reflected in the assignment of the session.

While, in this embodiment, the rating or assignment of sessions and recording of media are performed in the communication terminal, these processes may be performed in either or both the media server and the terminal.

As is described above, in accordance with the first embodiment of the present invention, the following effects can be achieved.

First, according to the priorities of sessions based on a session selection policy, the sessions are assigned to session processing sections. Thus, a high-priority session can be processed by a session processing section with high session processing capabilities.

Second, according to the priorities of sessions based on a session selection policy, the sessions are assigned to session processing sections. Consequently, switching to a high-priority session can be performed during the sessions. Second Embodiment

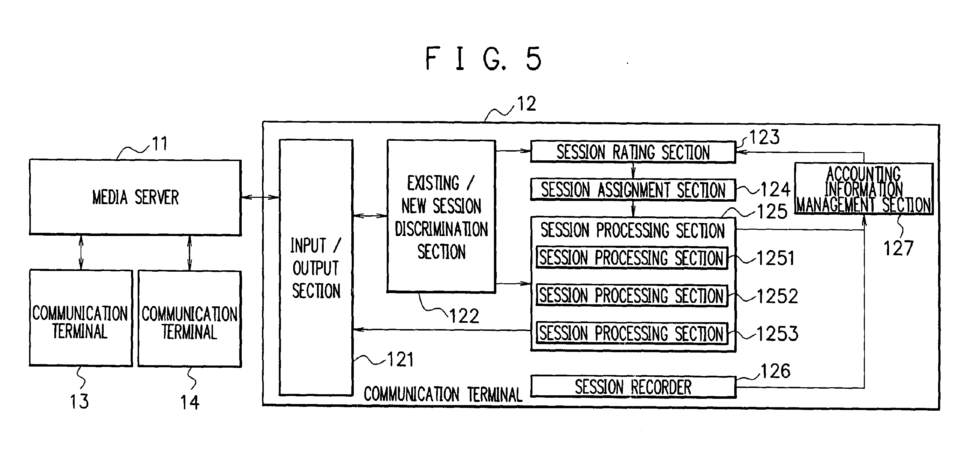

Fig. 5 is a block diagram showing the construction of a session processing system according to the second embodiment of the present invention. The session processing system of the second embodiment is of the same construction and operates in the same manner as that of the first embodiment except for the presence of an accounting information management section 127. The accounting information management section 127 is provided to enhance the session selection policy that define the priorities of sessions.

Referring to Fig. 5, the accounting information management section 127 collects accounting information from the plurality of session processing sections 125 and the session recorder 126. The session rating section 123 receives the accounting information from the accounting information management section 127. Incidentally, the session rating section 123 may receive accounting information from an accounting server outside the communication terminal.

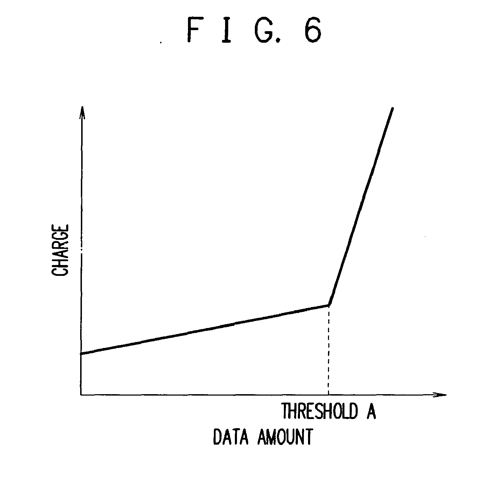

Fig. 6 is a diagram showing an example of an accounting system. It is assumed that a higher fee is charged for voice communication compared to text communication, as in the case where, for example, the amount of voice data is larger than that of text data even for the same information. As can be seen in Fig. 6, charge per unit of data amount increases at the point the amount of data exceeds a threshold A. By setting a priority criterion using the threshold A for the session rating section 123, the user can switch voice input/ output to text input/ output when the amount of data exceeds the threshold A. Besides, the same is applied to the case where voice communication and text communication are charged through different accounting systems.

As is described above, in accordance with the second embodiment of the present invention, the service type or mode of a session (voice communication, text communication, etc.) can be automatically changed by user's presetting based on the accounting system to which the user subscribes. Thus, it is possible to reduce the total of service use fees, including communication fee, switch use fee and recorder use fee, to the minimum.

Incidentally, in the first and second embodiments described above, with respect to a session whose priority changes (decreases) or a session having the lowest priority, the session processing (communication through the session) is terminated even while the session continues, or the session is recorded by the session recorder. However, for example, if the session has been output by voice, the voice output (acoustic output) may be switched to text output (visual output). Besides, in combination with recording to the session recorder, the voice output may be switched to text output and recording. Further, for example, when the voice output is performed concurrently with recording, the processing may be changed so that the voice output and recording are terminated and only text output is performed. Also, the processing may be changed so that the voice output is switched to text output while the recording is continued, or the recording is terminated and only the voice output is performed.

The present invention can be applied to technologies such as PTT or P2T (Push-To-Talk) and PoC (Push-to-talk over Cellular).

While the present invention has been described with reference to the particular illustrative embodiments, it is not to be restricted by the embodiments but only by the appended claims. It is to be appreciated that those skilled in the art can change or modify the embodiments without departing from the scope of the present invention.

Each feature disclosed in this specification (which term includes the claims) and/or shown in the drawings may be incorporated in the invention independently of other disclosed and/or illustrated features. Reference numerals appearing in the claims are by way of illustration only and should be disregarded when interpreting the scope of the claims.

The text of the abstract filed herewith is repeated here as part of the specification.

A session processing system, a server, a communication terminal, a session processing method, and a program for selecting an effective session or switching to an effective session based on a policy set by a user. A session processing system includes a plurality of communication terminals, and a server for providing electronic conversation sessions in which a plurality of users or speakers participate through the communication terminals. One or more of the communication terminals includes a plurality of session processing sections each processing a session.

## Claims

1. A session processing system **characterized by** comprising:
a plurality of communication terminals (12, 13, 14); and,
a server (11) for providing electronic conversation sessions in which a plurality of users participate through the communication terminals (12,13,14);
wherein one or more of the communication terminals (12, 13, 14) and/or the server (11) includes a plurality of session-processing sections (1251, 1252, 1253) each processing a session.

2. The session processing system claimed in claim 1, wherein one or more of the communication terminals (12, 13, 14) and/or the server (11) further includes:
an input/output section (121) for transmitting and receiving session data;
a session discrimination section (122) for determining, based on the session data received from the input/output section (121), whether a session is existing or is new so as to classify the session as a new or existing session;
a session rating section (123) for prioritizing, based on a preset policy, a session that has been determined to be a new session by the session discrimination section (122); and,
a session assignment section (124) for assigning the new session to one (1251) of session processing sections (1251, 1252, 1253) based on the priority determined by the session rating section (123) and the processing capabilities of the respective session processing sections.

3. The session processing system claimed in claim 2, wherein, in the case of a shortage of the session processing sections (1251, 1252, 1253) for processing sessions, the session assignment section (124) terminates communication through one or more sessions.

4. The session processing system claimed in claim 2, wherein the one or more of the communication terminals (12, 13, 14) and/or the server (11) further includes a session recorder (126) for storing the session data.

5. The session processingsystem claimed in claim 4, wherein, in the case of a shortage of the session processing sections (1251, 1252, 1253) for processing sessions, the session recorder (126) stores the media data of one or more sessions.

6. The session processing system claimed in claim 2, wherein, on completion of the processing of an existing session, the session assignment section (124) assigns another session to the session processing section (1251) to which the existing session has been assigned.

7. The session processing system claimed in claim 2, wherein, after having undergone the process by the session processing section (1251), an existing session is changed to a prescribed process.

8. The session processing system claimed in claim 2, wherein the policy is set at an arbitrary timing.

9. The session procession system claimed in claim 2, wherein the contents of the policy is concerned with one or more of: session start time, number of participants in each session, liveliness of each session, speaking status of participants in each session, and an accounting system for each session.

10. The session processing system claimed in claim 5, wherein, in the case of a shortage of the session processing sections (1251, 1252, 1253) for processing section sessions, the session assignment section (124) performs assignment so that a session having the lowest priority is stored in the session recorder (126).

11. The session processing system claimed in any preceding claim, wherein the sessions are performed using push-to-talk (PT1') communication.

12. The server used in the session processing system claimed in any preceding claim.

13. The communication terminal used in the session processing system claimed in any of claims 1 to 11.

14. A session processing method using a plurality of communication terminals (12, 13, 14) and a server (11) for providing electronic conversation sessions in which a plurality of users participate through the communication terminals, the method being **characterized by** comprising, in one or more of the communication terminals and/or in the server, the step of processing a plurality of the electronic conversation sessions.

15. The session processing method claimed in claim 14, further comprising, in the one or more of the communication terminals (12, 13, 14) and/or in a server (11), the steps of:
receiving session data;
determining whether a session is existing or is new, based on the received session data;
classifying the session as a new or an existing session;
prioritizing the session, if new, based on a preset policy; and,
assigning any such new session to one (1251) of session processing sections (1251, 1252, 1253) based on the priority and the processing capabilities of the respective session processing sections for processing the session.

16. The session processing method claimed in claim 15, wherein, in the case of a shortage of the session processing sections (1251, 1252, 1253) for processing sessions, communication through one or more sessions is terminated.

17. The session processing method claimed in claim 15, further comprising, in one of the communication terminals (12, 13, 14) and/or the server (11), the step of recording the session data.

18. The session processing method claimed in claim 17, wherein, in the case of a shortage of the session processing sections (1251, 1252, 1253), the media data of one or more sessions are recorded.

19. The session processing method claimed in claim 15, wherein, on completion of the processing of an existing session, another session is assigned to the session processing section (1251) to which the existing session has been assigned.

20. The session processing method claimed in claim 15, wherein, after having undergone the process by the session processing section, an existing session is changed to a prescribed process.

21. The session processing method claimed in claim 15, wherein the policy is set at an arbitrary timing.

22. The session processing method claimed in claim 15, wherein the contents of the policy is concerned with one or more of: session start time, number of participants in each session, liveliness of each session, speaking status of participants in each session, and an accounting system for each session.

23. The session processing method claimed in claim 18, wherein, in the case of a shortage of the session processing sections (1251, 1252, 1253) for processing sessions, a session having the lowest priority is stored.

24. The session processing method claimed in any of claims 14 to 23, wherein the sessions are performed using push-to-talk (PTT) communication.

25. A computer program product for providing electronic conversation sessions inwhich a plurality of users participate through their communication terminals, the computer program product being embodied on a computer-readable medium and being **characterized by** comprising code that, when executed, causes a computer to process a plurality of sessions.

26. The computer program product claimed in claim 25, wherein the code causes the computer to perform the steps of:
receiving session data;
determining whether a session is existing or is new, based on the received session data;
classifying the session, if new, based on a preset policy; and,
assigning any such new session to one of session processing sections (1251, 1252, 1253) based on the priority and the processing capabilities of the respective session processing sections for processing the session.

27. The computer program product claimed in claim 26, wherein, in the case of a shortage of the session processing sections (1251, 1252, 1253) for processing sessions, the code causes the computer to terminate communication through one or more sessions.

28. The computer program product claimed in claim 26, wherein the code causes the computer to store the session data.

29. The computer program product claimed in claim 28, wherein, in the case of a shortage of the session processing sections (1251, 1252, 1253) for processing sessions, the code causes the computer to store the media data of one or more sessions.

30. The computer program product claimed in claim 26, wherein, on completion of the processing of an existing session, the code causes the computer to assign another session to the session processing section (1251) to which the existing session has been assigned.

31. The computer program product claimed in claim 26, wherein, after the session processing section (1251) completes processing of an existing session, the code causes the computer to change the session to a prescribed process.

32. The computer program product claimed in claim 26, wherein the code causes the computer to set the policy at an arbitrary timing.

33. The computer program product claimed in claim 26, wherein the code causes the computer to determine the priority based on the policy, the contents of which are concerned with one or more of: session start time, number of participants in each session, liveliness of each session, speaking status of participants in each session, and an accounting system for each session.

34. The computer program product claimed in claim 29, wherein, in the case of a shortage of the session processing sections (1251, 1252, 1253) for processing sessions, the code causes the computer to store a session having the lowest priority.

35. The computer program product claimed in any of claims 25 to 34, wherein the sessions are performed using push-to-talk (PTT) communication.
